# EUROPÄISCHE PATENTSCHRIFT

(11) **EP 1 094 911 B1**
(45) Veröffentlichungstag und Bekanntmachung des Hinweises auf die Patenterteilung: **05.12.2001**
(21) Anmeldenummer: 99941410.5
(22) Anmeldetag: 25.06.1999
(51) Int. Cl.: B22F 9/06

(54) **VERFAHREN UND VORRICHTUNG ZUM HERSTELLEN VON WEICHLOTPULVER**
METHOD AND DEVICE FOR PRODUCING SOFT SOLDER POWDER
DISPOSITIF ET PROCEDE DE FABRICATION SANS PRESSION DE METAL D'APPORT DE BRASAGE TENDRE EN POUDRE

(30) Priorität: 29.06.1998 DE 19830057
(43) Veröffentlichungstag der Anmeldung: 02.05.2001
(73) Patentinhaber: Schulze, Jürgen, 14482 Potsdam (DE); Protsch, Walter, 14480 Potsdam (DE)
(72) Erfinder: Schulze, Jürgen, 14482 Potsdam (DE); Protsch, Walter, 14480 Potsdam (DE)
(74) Vertreter: Hannig, Wolf-Dieter, Dipl.-Ing.
(86) Internationale Anmeldenummer: DE9901901
(87) Internationale Veröffentlichungsnummer: WO0000313

(56) Entgegenhaltungen:
- DE-A- 4 313 149
- US-A- 1 959 014
- US-A- 3 081 069
- US-A- 4 915 509

## Beschreibung

Die Erfindung betrifft ein Verfahren zum drucklosen Herstellen von Weichlotpulver, insbesondere exakt sphärische Feinst-Metallpartikel in einem Kornbandspektrum von 1 bis 100 µm und mit einer Liquidustemperatur von <250 °C aus Massivlot, bei dem das in einer Vorlage befindliche Lot in einem hochtemperaturbeständigen Öl aufgeschmolzen und dispergiert wird, wobei das Lot/Öldichteverhältnis ≥2,5 beträgt.

Die Erfindung betrifft ferner eine Vorrichtung zum drucklosen Herstellen von Weichlotpulver, insbesondere exakt sphärische Feinst-Metallpartikel in einem Kornbandspektrum von 1 bis. 100 µm und mit einer Liquidustemperatur <250 oC aus Massivlot, mit einem beheizbaren Behälter zum Aufschmelzen des Lots in einem hochtemperaturbeständigem Öl.

Es ist bekannt, Weichlotpulver unter Verwendung von massiven Lotmetallen durch Strömungsdispergierung in Flüssigkeiten durch schnell rotierende Rührwerke herzustellen.
So beschreibt die DD 237 575 A3 ein Verfahren zur Herstellung von Lötpasten, bei dem ein aus Kolophonium, einem organischen Lösungsmittel, einer reduzierend wirkenden Verbindung und Triäthanolamin bestehenden Lotträger mit Lotmetall gemischt wird. In einem wahlweise heiz- und kühlbaren Gefäß mit Rührwerk entsteht bei 50 °C durch Mischen der Lotträger. Das Lotmetall wird in kompakter Form bei Erhitzunq des Gefäßes auf ca. 10 °C über den Schmelzpunkt des Lotmetalls hinzugegeben und die Schmelze unter hochtourigem Rühren mit ca. 10000 U/min dispergiert. Danach wird bis ca. 20 °C unter den Schmelzpunkt des Lotmetalls heruntergekühlt und bis zum Abkühlen auf Raumtemperatur das Rührwerk auf niedriger Drehzahl gehalten.
Dieses bekannte Verfahren hat den Nachteil, daß die erreichten Partikelgrößen mit etwa 150 µm keine Feinst-Metallpulver ergeben. Die dispergierten Lotteilchen haben außerdem unterschiedliche Durchmesser, d.h., sie weisen ein zu breites Kornverteilungsband auf. Das bekannte Verfahren konnte sich deshalb großtechnisch nicht durchsetzen, zumal es auch nur diskontinuierlich arbeitet.

Es ist auch bekannt, nach dem Rotor/Stator-Prinzip arbeitende Schereinrichtungen für die Herstellung von Emulsionen (flüssig/flüssig) und Suspensionen (fest/flüssig) einzusetzen (IKA-Maschinenbau-Prospekt "Dispergieren", S. 22-24, 1997). So werden diese Einrichtungen für Lacke, Farben, pharmazeutische Produkte, Metalloxid-Suspensionen und Beschichtungsmassen verwendet.
Bei diesem bekannten Prinzip muß regelmäßig dafür Sorge getragen werden, daß bei höherviskosen Medien Förderaggregate die Medienströmung aufrechterhalten.

Des weiteren ist aus der DE 44 02 042 A1 ein Verfahren zur Herstellung von mikropartikulierten Reflow-Lötmitteln bekannt, bei dem deren Lotmetallanteile in einem kleinen Kornband vorliegen. Das kompakte Lotmetall wird in einer hochtemperierbaren organischen Flüssigkeit wie Rizinusöl aufgeschmolzen, mit Hilfe des Strömungsdispergierverfahrens zu einem kugelsymmetrischen Kornband von vorzugsweise 3 bis 10 µm Durchmesser geführt und die organische Flüssigkeit soweit entfernt, daß die Metallpartikulate bedeckt bleiben, so daß sie in eine Emulsion zu überführen ist und die Einzelteilchen der Suspension und Emulsion nach der Methode der Komplexkoazervation mit einem Melaminpolymerisat des Schichtdickenbereichs von 50 bis 250 nm überzogen werden. Die mikropartikulierte organische Phase wird anschließend von der mikropartikulierten Metallphase quantitativ getrennt.
Diese mikropartikulierten Metallpulver sind durch ein duroplastisches Polymersystem geschützt, können jedoch nur bei Einsatz sehr stark aktivierter Flußmittel wieder freigesetzt werden. Diese Flußmittel führen zur Zerstörung der mikroelektronische Schaltkreise und sind daher ungeeignet.
Außerdem trägt dieses Verfahren lediglich laborhaften Charakter und ist nicht in der Lage, einen von Charge zu Charge gleichbleibenden Kugeldurchmesser zu gewährleisten.

Eine andere bekannte Lösung (US 4 648 820) schmilzt Metall wie Aluminium in einem Tiegel auf, führt das aufgeschmolzene Metall einer mit Kühlflüssigkeit gefüllten Kühlkammer zu, in der das flüssige Metall mittels Spinnscheibe in Tropfen dispergiert, die wiederum zusammen mit der Kühlflüssigkeit in einem Rezirkulationskreislauf abgezogen werden und in einer Separiervorrichtung von der Kühlflüssigkeit getrennt werden, wobei letztere in die Kühlkammer rückgeführt wird.

Nach der US 5 411 602 wird Lot aufgeschmolzen und das aufgeschmolzene Lot mittels Inertgas in Tropfen zerteilt.
Auch dieser Stand der Technik ist mit dem Nachteil behaftet, daß die hergestellten Metallpartikel keine gleichbleibenden Kugeldurchmesser ergeben, so daß in jedem Fall Sortierprozesse notwendig werden, um annähernd Metallpartikel auszusondern, die gleiche Kugeldurchmesser aufweisen. Dies macht diese bekannten Lösungen ineffizient.

Bei diesem Stand der Technik liegt der Erfindung die Aufgabe zugrunde, ein Verfahren und eine Vorrichtung der eingangs genannten Art derart zu verbessern, daß die nach dem Strömungsdispergierprinzip hergestellten Metallpulver ein enges Kornbandspektrum deutlich unter 100 µm, eine exakt sphärische Form bei nahezu gleichbleibenden Durchmesser unter Einsparung jeglicher Klassierung und geringen Kosten im quasikontinuierlichen Prozeß erreichen.

Diese Aufgabe wird mit den folgenden Schritten
a) Einspeisen des geschmolzenen Lotes durch Schwerkraft in eine weitere Olvorlage unter Einstellung eines Volumenverhältnisses von Öl zur Lotschmelze von mindestens 10:1,
b) Dispergieren des flüssigen Lotes durch Rühren und ein nachfolgendes Abscheren in hintereinandergeschalteten Scherstufen nach dem Rotor-/Statorprinzip bei Drehzahlen von 1500 bis 5000 U/min unter Zugabe von Öl aus der Vorlage des Schrittes a),
c) mindestens 20faches Umwälzen des Lot/Öl-Gemisches des Schrittes b) in einem Kreislauf entgegen der Strömungsrichtung über die Olvorlage des Schrittes a) und den Scherstufen, wobei durch Steuerung der Schergeschwindigkeit, der Stufenanzahl und der Geometrie der Rotoren die Partikelgröße und Partikelgrößenverteilung des Dispergats im Dispergens eingestellt wird,
d) Ausschleusen des Lot/Öl-Gemisches aus dem Kreislauf des Schrittes c) in eine weitere Ölvorlage zum Abtrennen des Dispergats durch Sedimentation und Zurückbeförderung des Öls in die Vorlage des Schrittes b) und/oder a) und
e) Entnehmen und Zuführen des Dispergats des Schrittes d) zum nachfolgenden Reinigen
gelöst.

Nach einem weiteren bevorzugten Merkmal des erfindungsgemäßen Verfahrens werden als Öl pflanzliche oder tierische Öle, vorzugsweise Rizinusöl, verwendet.

Überraschenderweise wurde festgestellt, daß Lotschmelzen mit äußerst hoher Viskosität bei einem Dichteverhältnis zwischen Dispergat und Dispergens von ≥2,5 mit einer Schereinrichtung zerteilbar sind, ohne daß die Rotoren in den Statoren verklemmen und zusätzliche Förderaggregate notwendig sind.
In weiterer bevorzugter Ausgestaltung des erfindungsgemäßen Verfahrens durchströmt deshalb das Lot/Ol-Gemisch die Scherstufen nacheinander in Schwerkraftrichtung. Das Lot/Öl-Gemisch wird axial durch die Schwerkraft in den Einlaß der ersten Scherstufe gedrückt, wo es in den Innenraum des ersten Rotors eintritt, in die zinnenartigen Scheröffnungen des ersten Rotors gelangt, durch die Schlitze des ersten Rotors umgreifenden Stators strömt und damit radial in den Einlaßraum der zweiten Scherstufe gepreßt wird. Das Lot/Öl-Gemisch gelangt über die Schlitze des zweiten Rotors und Stators in die dritte Scherstufe. Beim Vorbeibewegen der Rotorschlitze an den Statorschlitzen entstehen durch die hohen Peripheriegheschwindigkeiten sehr hohe Scherkräfte, die das vom Öl umhüllte Lot zerteilen. Je nach Anzahl und Breite der Schlitzöffnungen in den einzelnen Scherstufen, den Drehzahlen und der Geometrie der Rotoren läßt sich bei gewählter Arbeitstemperatur die Größe der Lotpartikel regeln.
Wegen der hohen Scherkräfte entsteht weiterhin der besondere Vorteil, daß das Lot/Öl-Gemisch in den Kreislauf des Schrittes c) gefördert wird.
Nach mindestens 20maliger Umwälzung und somit wiederholter Scherung werden Partikelgrößen von deutlich unter 100 µm erreicht.

In weiterer bevorzugter Ausgestaltung des erfindungsgemäßen Verfahrens wird die Prozeßtemperatur in den Schritten b) und c) auf etwa maximal 30 °C oberhalb der Liquidustemperatur des Lotes und die Öltemperatur des Schrittes d) auf etwa 90 bis 130 °C durch das Wärmeträgermedium eingestellt.

Für den Fall, daß das Dichteverhältnis von Dispergat zu Dispergens deutlich mehr als ≥2,5 beträgt, wird das Lot/Öl-Gemisch zusätzlich gerührt.

Ein weiteres bevorzugtes Merkmal des erfindungsgemäßen Verfahrens sieht vor, daß die einzelnen Stufen durch separate Heiz-/Kühlkreisläufe versorgt werden. Natürlich gehört es zu dem erfindungsgemäßen Verfahren, wenn mehrere Stufen zusammengefaßt werden und jeweils von einem gemeinsamen Heiz-/Kühlkreislauf bedient werden. Denkbar ist auch, daß nur ein einziger Heiz-/Kühlkreislauf verwendet wird.

In weiterer bevorzugter Ausgestaltung des erfindungsgemäßen Verfahrens wird das Dispergat des Schrittes e) zu seiner Entnahme mit einem Lösungsmittel versetzt, durch Rühren in eine Suspension überführt und diese zum Reinigen in eine nicht dargestellte Reinigungsanlage abgepumpt. Als Lösungsmittel des Schrittes e) haben sich fettlösende Lösungsmittel, vorzugsweise Azeton, als besonders geeignet erwiesen. Die Entnahme des Dispergats gemäß Schritt e kann jedoch auch durch Schwerkraftsammlung vorgenommen werden.

Die Aufgabe wird weiterhin mit einer Vorrichtung dadurch gelöst, daß in einem Kompaktmodul der Schmelzbehälter für das Massivlot und ein Dispergierbehälter für die Dispergierung der Lotschmelze im Öl kaskadenartig zueinander und ein Sedimentationsbehälter für die Abtrennung des Lotdispergats vom Öl unterhalb des Dispergierbehälters angeordnet sind, und daß die Behälter miteinander durch Rohrleitungen verbunden sind, wobei sich der Schmelzbehälter oberhalb des Dispergierbehalters im Kompaktmodul befindet, und daß dem Dispergierbehälter eine mehrstufige Schereinrichtung zum Zerteilen der Lotschmelze in Schmelztröpfchen zugeordnet ist, wobei die Zuleitung vom Schmelzbehälter zum Dispergierbehälter unter Neigung durch ein Rohrstück injektorartig in den Bodenbereich des Dispergierbehälters geführt ist, an dessen tiefsten Punkt ein Anschlußstutzen mit Flansch für den Anschluß der Schereinrichtung angeordnet ist, deren Auslaß an die in den oberen Teil des Dispergierbehälters zurückgeführte Umwälzrohrleitung angeflanscht ist, die über eine Abzweigleitung in den Sedimentationsbehälter einmündet, welcher seinerseits durch eine Steigleitung mit dem oberen Teil des Dispergierbehälters über eine Pumpe mit Ablaufleitungen in Verbindung steht, und daß alle Behälter, Rohrleitungen, die Schereinrichtung und Pumpe durch mindestens eine Temperiereinrichtung beheiz- oder kühlbar ist.

Alle Behälter und Rohrleitungen sind nach einem weiteren Merkmal der erfindungsgemäßen Vorrichtung als Doppelwandkörper aus Edelstahl, vorzugsweise V2A, ausgeführt, deren von den Innen- und Außenwänden gebildeten Zwischenräume mit einem Hochtemperatur-Wärmeträgeröl aus der Temperiereinrichtung beaufschlagt sind.

Eine weitere bevorzugte Ausführungsart der erfindungsgemäßen Vorrichtung sieht vor, daß der Dispergierbehälter in einem separaten Heiz-/Kühlkreislauf und die Pumpe, die Steigleitung und die Ablaufleitung in einen weiteren separaten Heiz-/Kühlkreislauf eingebunden sind, und daß der Schmelzbehälter mit Abführleitung in einen separaten Heiz-/Kühlkreislauf, die Schereinrichtung und Umwälzrohrleitung in einen separaten Heiz-/Kühlkreislauf und zusätzlich in einem Kühlkreislauf mit Kühlbehälter, der Sedimentationsbehälter mit Abzweigleitung in einen separaten Heiz-/Kühlkreislauf zusammengefaßt sind, wobei wärmebeständige flexible Metallschläuche jeweils die verbindenden Rohrleitungen bilden und jeweils mindestens an einen gemeinsamen Verteiler angeschlossen sind, welcher mit der Temperiereinrichtung durch eine Vorlaufleitung und Rücklaufleitung verbunden ist.

Es ist aber auch möglich, ohne die Erfindung zu verlassen, daß alle Behälter, Rohrleitungen, Stellorgane, Anschlußstücke, Flansche und die Schereinrichtung in einem gemeinsamen Heiz-/Kühlkreislauf eingebunden sind.
Ebenso gehört es zu der Erfindung, wenn anstelle der Ölheizung eine elektrische Heizung eingesetzt wird.

In einer weiteren zweckmäßigen Ausgestaltung der erfindungsgemäßen Vorrichtung sind die Rohrleitungen und das Anschlußstück mit Absperrorganen, vorzugsweise Kugelhahnen in Edelstahlausführung, versehen.

In besonders vorteilhafter weiterer Ausgestaltung der erfindungsgemäßen Vorrichtung besteht die Schereinrichtung aus mehreren, vorzugsweise drei, hintereinander auf einer Antriebswelle drehfest angeordneten Rotoren, die durch Schlitze voneinander beabstandete Zähne aufweisen, wobei die Rotoren in einem die Scherstufen voneinander trennenden, gegen Verdrehung gesicherten Stator eingesetzt sind, der durch Schlitze beabstandete Zähne aufweist, wobei die Schlitze im Rotor und Stator bei Drehung des Rotors Durchtrittsöffnungen zum Durchtritt des Lot/Ol-Gemisches in die nächstfolgende Scherstufe freigeben.

Die Zähne von Rotor und Stator bilden in weiterer bevorzugter Ausgestaltung der erfindungsgemäßen Vorrichtung Zahnkreise, die konzentrisch zueinander und ineinandergesteckt angeordnet sind.

Die Schereinrichtung ist nach einem weiteren bevorzugten Merkmal der erfindungsgemäßen Vorrichtung in senkrechter Einbaulage in Flucht der Achse des Dispergierbehälters angeordnet, wobei das Lot/Öl-Gemisch axial in den Einlaß der Schereinrichtung selbständig gesaugt und radial durch die Schlitze der Rotor-Statoranordnung gepreßt wird.

Bei größeren Dichteunterschieden zwischen Dispergat und Dispergens, insbesondere bei einem Verhältnis ≥2,5, ist der Dispergierbehälter zweckmäßigerweise mit einem Rührwerk versehen.

Im Sedimentationsbehälter befindet sich ein Einsatz mit Auffangkorb für die Sammlung und Abtrennung der Lotpartikel aus dem Prozeß. Hierzu befindet sich der Auffangkorb in der Nähe des Bodens des Sedimentationsbehälters, so daß die Lotpartikel durch die Schwerkraft in den Auffangkorb absinken, der aus dem Sedimentationsbehälter dann entnehmbar ist. Anstelle der Ablaufleitung und des Auffangkorbes kann nach einem weiteren bevorzugten Merkmal ein durch die Behälterabdeckung des Sedimentationsbehälters geführtes Rührwerk und ein Tauchrohr vorgesehen sein, das einerends bis in die Nähe des Behälterbodens des Sedimentaionsbehälters höhenverstellbar reicht und anderenends mit einer drehrichtungsvariablen Pumpe zum Absaugen des suspendierten Dispergates bzw. Zuführen von Lösungsmittel in den Behälter verbunden ist.

Zur Einhaltung der Prozeßtemperatur auf mindestens 30 °C oberhalb der Liquidustemperatur sind in allen Behältern und Rohrleitungen Temperaturfühler nahe des Lotes vorgesehen. Damit ist sichergestellt, daß die Viskosität der Lotschmelze annähernd in allen Stufen gleich bleibt.

In weiterer bevorzugter Ausgestaltung der erfindungsgemäßen Vorrichtung besteht das Kompaktmodul aus einem Gehäusegestell mit einer Bodenplatte, in dem tischartige Haltegestelle für die Vormontage der Behälter, Rohrleitungen, Verteiler und der Pumpe vorgesehen sind.

Die Schereinrichtung ist nach einem weiteren Merkmal der erfindungsgemäßen Vorrichtung von einem auf der Bodenplatte verfahrenbaren Einsatz aufgenommen und spannungsfrei an dem Flansch des Kugelhahns und dem Flansch der Umwälzleitung gehalten. Dies gewährleistet, daß die Schereinrichtung ohne großen Aufwand demontiert, umgerüstet und wieder montiert werden kann.

Alle Behälter, Rohrleitungen, Vorlauf- und Rücklaufleitungen, Absperrorgane, Verteiler und die Pumpe sind wärmeisoliert, um die Wärmeverluste durch Abstrahlung gering zu halten., Des weiteren sieht ein bevorzugtes Merkmal der erfindungsgemäßen Vorrichtung vor, daß das Gehäusegestell des Kompaktmoduls mit Wandblechen versehen ist, deren Innenseiten Wärme- und Schalldammplatten oder -matten mit aufkaschierter Aluminiumfolie tragen.

In weiterer bevorzugter Ausgestaltung der erfindungsgemäßen Vorrichtung sind die Behälter, Rohrleitungen, Vor- und Rücklaufleitungen, Absperrorgane, die Pumpe, Schereinrichtung, die Metallschläuche und die Verteiler wärmeisoliert.

In einer weiteren bevorzugten Ausführungsform der erfindungsgemäßen Vorrichtung ist die Temperiereinrichtung verfahrbar ausgebildet und außerhalb vom Kompaktmodul angeordnet. Ebenso kann die Temperiereinrichtung auch in den Kompaktmodul integriert sein.

Die Erfindung zeichnet sich gegenüber allen bisher bekannten Strömungsdispergierverfahren dadurch aus, daß Weichlotpulver mit exakt sphärischer Form in einem engen Kornspektrum großtechnisch quasikontinuierlich erzeugt werden kann. Durch das einfache Auswechseln der Schereinrichtung, die Änderung der Schlitzabmessungen, die Variation der Anzahl der Scherstufen, der Drehzahlen und der Anzahl der Umwälzungen lassen sich Kugeldurchmesser der Lotpartikel kostengünstig mit hoher Genauigkeit in einem engen Kornband herstellen.
Die erfindungsgemäße Vorrichtung ist kompakt aufgebaut, bedienungsfreundlich und wartungsarm.

Weitere Vorteile und Einzelheiten ergeben sich aus der nachfolgenden Beschreibung unter Bezugnahme auf die beigefügten Zeichnungen. Die Erfindung soll nachstehend an einem Ausführungsbeispiel näher erläutert werden.

Es zeigen:
- Fig. 1: eine prinzipielle Darstellung der erfindungsgemäßen Vorrichtung,
- Fig. 2: eine dreistufige Schereinrichtung in Schnittdarstellung,
- Fig.3: eine Variante des Sedimentationsbehälters zur Entnahme des Dispergats als Auszug gemäß Fig. 1,
- Fig. 4 und 5: ein Schema der Heiz-/Kühlkreisläufe der einzelnen Verfahrensstufen und
- Fig. 6: ein Schema des erfindungsgemäßen Verfahrens.

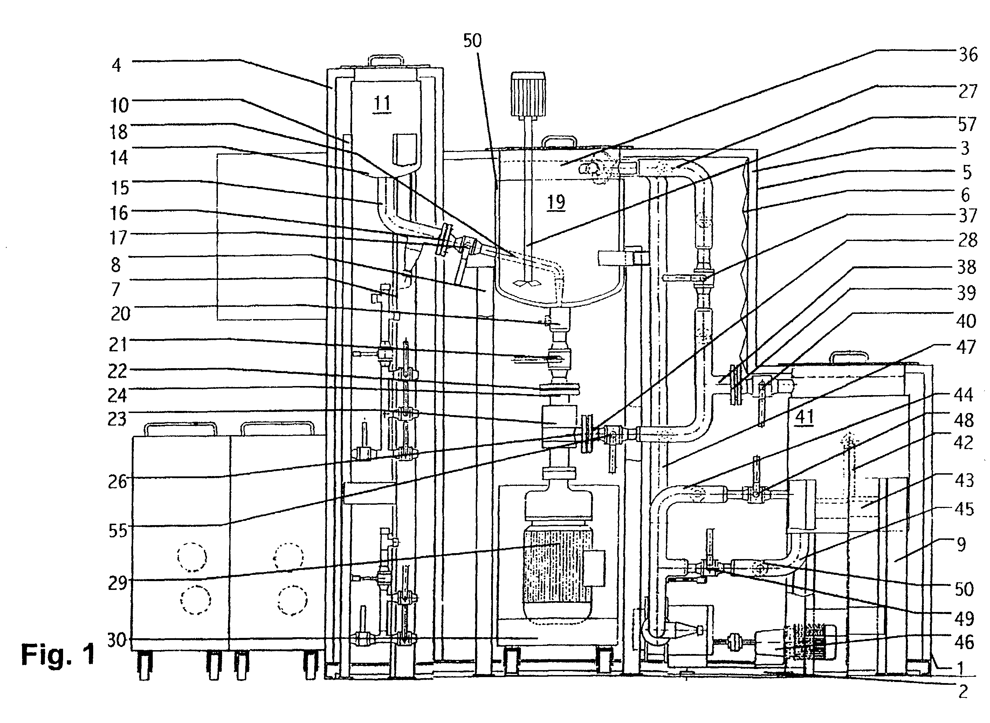

Wie aus Fig. 1 im einzelnen ersichtlich, besteht die erfindungsgemäße Vorrichtung aus einem containerartigen Kompaktmodul **1,** in dem alle wesentlichen Baueinheiten untergebracht sind. Das Kompaktmodul **1** hat eine in etwa rechteckige Bodenplatte **2,** auf der vertikale und horizontale Streben **3** zu einem quaderförmigen Gehäusegestell **4** verbunden sind. Die Streben **3** bestehen aus Winkelprofilstahl oder - aluminium. Alle Seitenflächen und die Deckfläche des quaderförmigen Gehäusegestells **4** sind mit Wandblechen **5** belegt, die innenseitig mit einer Wärme- und Schalidämmplatte **6** versehen sind, die aus geeignetem schallabsorbierendem Material mit aufkaschierter Aluminiumfolie besteht.
In das Kompaktmodul **1** sind tischartige Haltegestelle **7, 8** und **9** für die Hauptkomponenten der erfindungsgemäßen Vorrichtung vormontiert eingesetzt.

Das Haltegestell **7,** ebenfalls aus Winkelprofil gefertigt, nimmt an seinem der Dachfläche des Kompaktmoduls **1** oberen Bereich **10** den Schmelzbehälter **11** auf. Im mittleren und unteren Bereich des Haltegestells befinden sich Heizverteiler **12** und **13** für die Versorgung der einzelnen Baueinheiten mit dem Heizmedium. Der Schmelzbehälter **11** hat einen gewölbt ausgebildeten Boden **14,** an dessen tiefsten Punkt eine vertikal einbindende Abführleitung **15** angeschlossen ist. Die Abführleitung **15** ist als 60°-Bogen mit Flansch **16** für den Anschluß eines Kugelhahnes **17** ausgebildet, mit dem die Abführleitung **15** geöffnet und geschlossen werden kann.
Der Kugelhahn **17** geht ablaufseitig in ein Rohrleitungsstück **18** über, das injektorartig bis in der. Bodenbereich des Dispergierbehälters **19** unter einem Winkel von 60° reicht. Der Dispergierbehälter **19** wird von dem Haltegestell **8** getragen und ist so positioniert, daß er ausreichend tiefer liegt als der tiefste Punkt des Schmelzbehälters **11,** so daß die Lotschmelze durch ihre Schwerkraft in den Dispergierbehälter **19** gelangen kann.
Der Dispergierbehälter **19** hat wie der Schmelzbehälter **11,** einen gewölbten Bodenbereich, in dem sich die Lotschmelze sammelt. Im tiefsten Punkt des Dispergierbehälters **19** befindet sich ein in Flucht der Behälterachse des Dispergierbehälters **19** abgehender Anschlußstutzen **20** für den Anschluß eines Kugelhahnes **21** zum Absperren und Öffnen des Anschlußstutzens **20.** Ablaufseitig trägt der Kugelhahn **21** einen Flansch **22,** an dem die Schereinrichtung **23** mit ihrem Einlaßflansch **24** in vertikaler Einbaulage angeschlossen ist. Der Auslaß **25** der Schereinrichtung **23** ist mit einem Auslaßflansch **26** versehen, der senkrecht zur Einbaulage positioniert ist.
Am Haltegestell **8** ist außerdem eine Umwälzleitung **27** mit Flansch **28** vormontiert, der mit dem Auslaßflansch **26** der Schereinrichtung **23** lösbar verbunden ist.

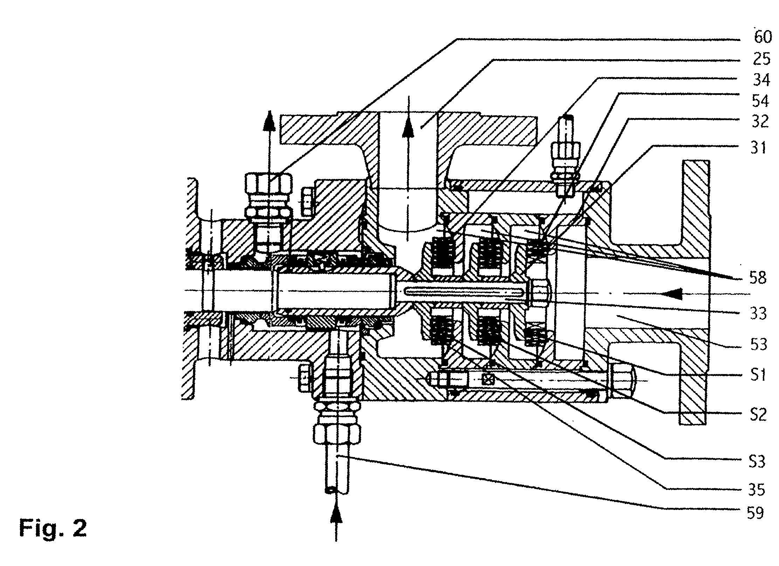

Die Schereinrichtung **23** mit ihrem Antriebsaggregat **29** ist von einem auf der Bodenplatte **2** verfahrbaren Einsatz so gehalten, daß die Schereinrichtung **23** spannungsfrei am Flansch **22** des Kugelhahnes **21** bzw. am Flansch **28** der Umwälzleitung **27** verschraubbar ist.
Die Schereinrichtung **23** besteht, wie in Fig. 2 gezeigt, aus drei Scherstufen **S1, S2** und **S3** mit sechs Scherraumen **58.** Jede Scherstufe setzt sich aus einem Rotor **31** und einem Stator **32** zusammen. Der Rotor **31** sitzt drehfest auf der Antriebswelle **33** der Schereinrichtung **23,** die vom Antriebsaggregat **29,** beispielsweise einem Motor, angetrieben wird. Der Rotor **31** dreht mit der Antriebswelle **33** im Stator **32** mit einer Drehzahl von etwa 2500 U/min und hat koaxial zur Welle **33** verteilte Zähne, die durch Schlitze **34** voneinander beabstandet sind. Der Stator **32** besitzt ebenfalls durch Schlitze **35** beabstandete Zähne. Die Zähne sind koaxial zueinander angeordnet. Die Schlitze **34** und **35** führen in die zweite Scherstufe **S2**.
Die zweite Scherstufe **S2** ist wie die erste aufgebaut, nur daß die Anzahl der Zähne und damit die Zahl der Schlitze **34** im Stator **32** größer ist. Wiederum führen die Schlitze **34** im Stator **32** der Scherstufe **S2** in den Raum der Scherstufe **S3**.

Die Umwälzleitung **27** führt nach Fig. 1 in den oberen Bereich des Dispergierbehälters **19** zurück, wobei diese Leitung oberhalb des Flüssigkeitsspiegels des Füllmediums in den Dispergierbehälter **19** einmündet und durch einen Kugelhahn **37,** der sich etwa in Höhe des Behälterbodens befindet, abgesperrt oder geöffnet werden kann. Etwa unterhalb dieses Kugelhahnes **37** hat die Umwälzleitung **27** eine horizontal verlaufende Abzweigleitung **38** mit Flansch **39,** an dem ein Kugelhahn **40** angeflanscht ist, der ablaufseitig in den oberen Bereich eines Sedimentationsbehälters **41** einbindet.

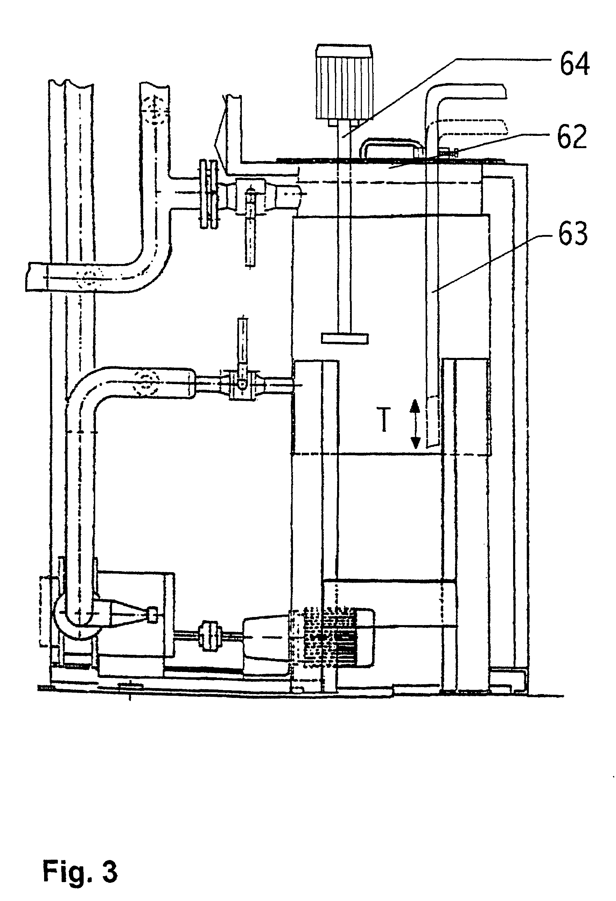

Dieser Sedimentationsbehälter **41** liegt deutlich unterhalb des Dispergierbehälters **19** und ist vom Haltegestell **9** aufgenommen, das mit dem Rahmen des Haltegestells **8** verbunden ist. Im Sedimentationsbehälter **41** ist bodenseitig ein Einsatz **42** mit einem Auffangkorb **43** eingesetzt. Zwei Ablaufleitungen **44** und **45** führen vom Bodenbereich des Sedimentationsbehälters **41** über eine Kreiskolbenpumpe **46** in eine am Rahmen des Haltegestells **8** befestigte Steigleitung **47,** die in den oberen Bereich des Dispergierbehälters **19** oberhalb des Oberflächenspiegels des Füllmediums zurückgeführt wird. In die Ablaufleitungen **44** und **45** sind Kugelhähne **48** und **49** zum Absperren und Öffnen der Leitungen integriert.
Anstelle des Auffangkorbes **43** und anstelle der Ablaufleitung **45** ist wie in Fig. 3 dargestellt, ein Rührwerk **64** und ein Tauchrohr **63** vorgesehen. Das Rührwerk **64** ist durch die Behälterabdeckung **62** des Sedimentationsbehälters **41** geführt und reicht etwa bis in Höhe der Einmündestelle der in den Behälter **41** einmündenden horizontalen Abzweigleitung **38.** Das Tauchrohr **63** durchdringt ebenfalls die Behälterabdeckung **62** und ist an dieser höhenverstellbar gehalten, so daß die Eintauchtiefe **T** des Tauchrohres **63** in den Sedimentationsbehälter **41** variierbar ist. Das Ende des Tauchrohres **62,** das aus der Behälterabdeckung ragt, ist mit einer nichtdargestellten drehrichtungsvariablen Pumpe verbunden, so daß mit diesem Tauchrohr in Lösungsmittel suspendiertes Lotdispergat abgesaugt bzw. Lösungsmittel in den Sedimentationsbehälter **41** gepumpt werden kann. Mit dem Rührwerk **64** wird das durch die Schwerkraft abgesunkene Lotdispergat und das Lösungsmittel in eine Suspension überführt. Es bedarf keiner gesonderten Erwähnung, daß natürlich die Ablaufleitung **45** montiert bleiben kann, diese muß nur durch den Kugelhahn **49** geschlossen bleiben, wenn ein Absaugen des Lotdispergats zwecks Zuführung zu einer nicht gezeigten Reinigungsanlage vorgenommen wird.

Die Behälter **11, 19** und **41,** die Leitungen **15, 18, 27, 38, 44, 45, 47** und **63,** die Heizverteiler **12** und **13,** die Kugelhähne **17, 21, 37, 40, 48** und **49** sind mit einer nicht dargestellten Wärmeisolierung umhüllt.

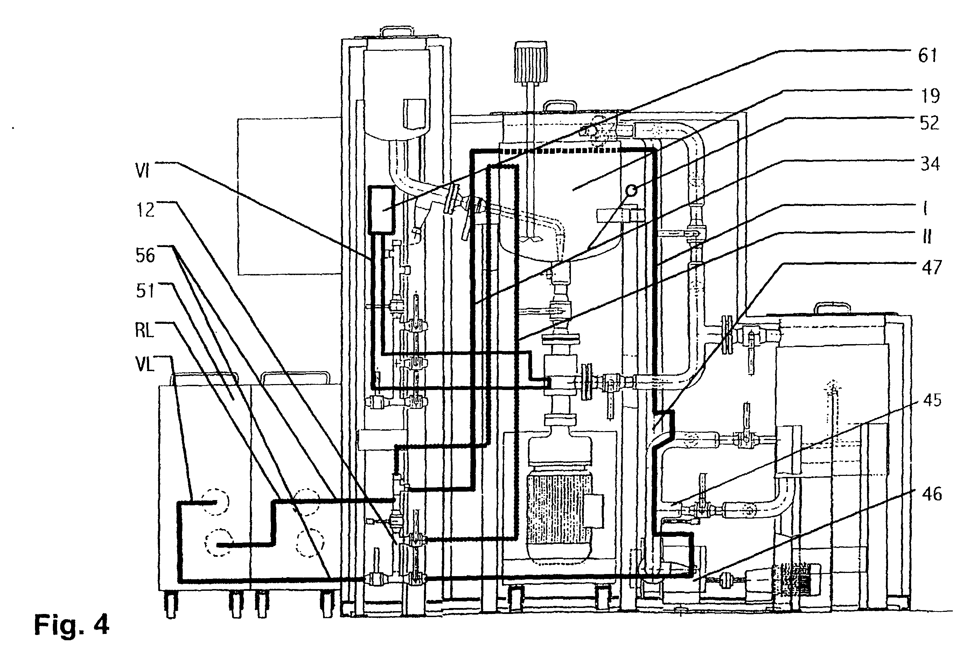

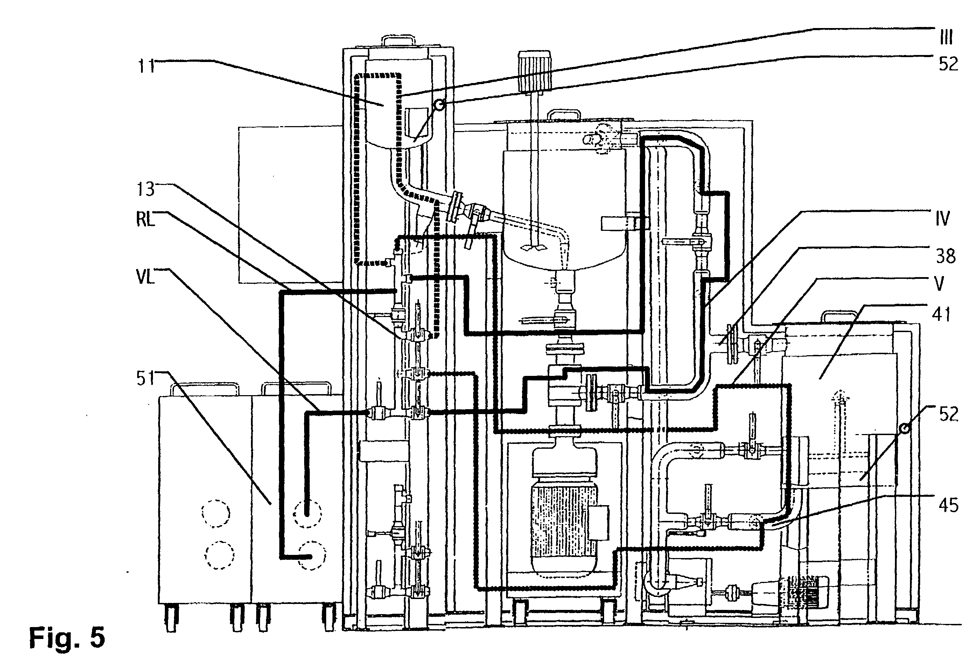

Die Fig. 4 und 5 zeigen die Heiz-/Kühlkreisläufe für die Behälter und Rohrleitungen. Alle Behälter und Rohrleitungen sind als Doppelwandkörper aus Edelstahl, beispielsweise V2A, gefertigt. Die Räume **50** zwischen Außenwand und Innenwand der Doppelwandkörper werden mit einem handelsüblichen Wärmeträgeröl, das eine Einsatztemperatur von 300 °C garantiert, beaufschlagt. Von der Temperiereinrichtung 51 führen flexible Metallschläuche **56** als Vor- und Rücklauf **VL** bzw. **RL** zu dem Heizverteiler **12,** der durch ebenfalls flexible Metallschläuche **56** einen Heiz-/Kühlkreislauf **I** und **II** bildet. Der Heiz-/Kühlkreislauf **I** führt vom Vorlauf **VL** des Heizverteilers **12** über die Kreiskolbenpumpe **46,** die Steigleitung **47** und die Ablaufleitung **44** zum Rücklauf des Heizverteilers **12.** Der Heiz-/ Kühlkreislauf **II** versorgt ausschließlich den Dispergierbehälter **19.** Der separate Kühlkreislauf **VI** kühlt nicht dargestellte Gleitringdichtungen in der Schereinrichtung **23.** Von einem Kühlbehälter **61** mit Pumpe wird Kühlflüssigkeit nach dem Siphonprinzip über die Zuleitung **59** in die Schereinrichtung **23** geleitet und über die Ableitung **60** in den Kühlbehälter **61** zurückgefördert.
Der andere Heizverteiler **13** ist durch flexible Metallschläuche **56** mit der Temperiereinrichtung **51** verbunden. Vom Heizverteiler **13** verlaufen insgesamt die Heiz-/Kühlkreisläufe **III, IV** und **V.** In den Heiz-/Kühlkreislauf **III** ist der Schmelzbehälter **11** und die Ablaufleitung **15,** in den Heiz-/Kühlkreislauf **IV** die Schereinrichtung **23** und die Umwälzleitung **27,** in den Heiz-/Kühlkreislauf **V** der Sedimentationsbehälter **41** mit Abzweigleitung **38** und Abzweigleitung **45** eingebunden. Flexible Metallschläuche bilden auch hier die entsprechenden Versorgungsleitungen.

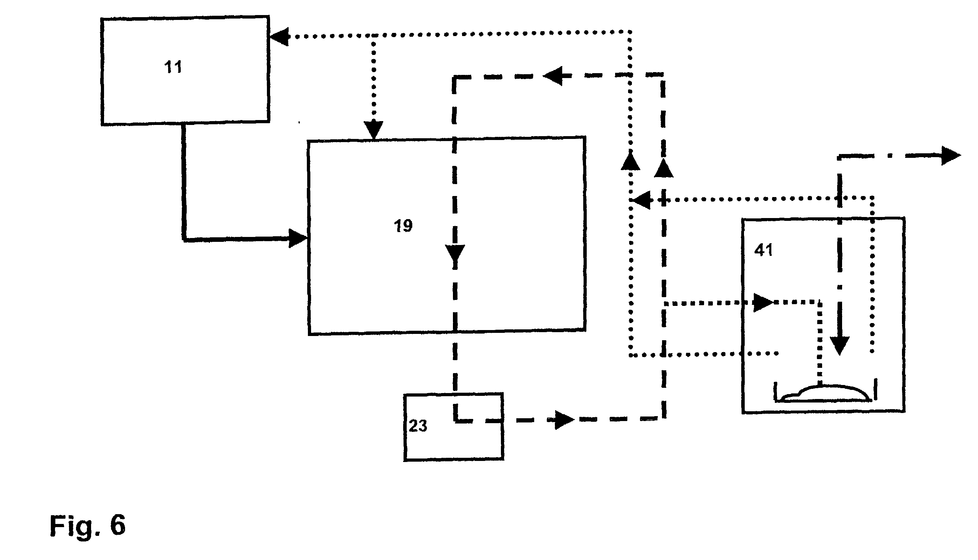

In der Fig. 6 ist der Ablauf des erfindungsgemäßen Verfahrens prinzipiell dargestellt. In den Schmelzbehälter 11 wird Massivlot, beispielsweise 10 kg einer Sn63Pb37-Legierung, zusammen mit Rizinusöl eingefüllt. Das Lot wird vom Öl vollkommen bedeckt und aufgeschmolzen. Die Arbeitstemperatur wird auf etwa 60 °C oberhalb der Liquidustemperatur durch den Heiz-/Kühlreislauf **II** gehalten.
Im Schmelzbehälter **11** ist für die exakte Regelung der Temperatur ein Temperaturfühler **52** montiert, so daß die Schmelztemperatur direkt meßbar ist. Dieser Meßwert dient zur Steuerung des Heiz-/Kühlkreislaufes.

Nachdem das Massivlot aufgeschmolzen ist, wird der Kugelhahn **17** geöffnet und die Lotschmelze rinnt zusammen mit dem Öl in den Dispergierbehälter **19,** der so dimensioniert ist, daß auf ein Teil Lotschmelze zehn Teile Öl entfallen. Die Lotschmelze sinkt in den Bodenbereich des Dispergierbehälters **19** und gelangt bei geöffnetem Kugelhahn **21** der Ablaufleitung **20** in den Einlaß **53** der Schereinrichtung **23.** Die Lotschmelze strömt dabei axial der ersten Scherstufe **S1** zu, wo die Schmelze von dem Rotor **31** der Schereinrichtung erfaßt und zerteilt wird.

Der Rotor **31** dreht sich mit der Antriebswelle **33** der Schereinrichtung **23,** die vom Antriebsaggregat **29** angetrieben wird. Die Lotschmelze wird durch die zinnenartigen Schlitze **34** des Rotors **31** radial umgelenkt und in die zinnenartigen Schlitze **35** des Stators **32** hineingepreßt, wenn der Schlitz **34** im Rotor **31** mit dem Schlitz **35** im Stator **32** zur Deckung gelangt und eine Durchtrittsöffnung freigibt. Beim Vorbeibewegen des Schlitzes **34** wird der Schmelzfluß abgeschert. Es entstehen Schmelztropfchen. Nach Durchlaufen der ersten Scherstufe **S1** gelangt das Lot/Öl-Gemisch in die zweite Scherstufe **S2,** wo wiederum eine axiale Zuführung und radiale Umlenkung des Lot/Öl-Gemisches erfolgt, bevor die dritte Scherstufe S3 durchströmt wird.
Je nach Anzahl und Breite bzw. Geometrie der Schlitze am Umfang von Rotor **31** und Stator **32** sowie der Drehzahl läßt sich die gewünschte Partikelgröße der abgeteilten Lotschmnelzteilchen einstellen.
Nach der Zerteilung der Lotschmelze in den Scherstufen **S1, S2** und **S3** gelangt das Lot/Öl-Gemisch in die durch einen Kugelhahn **55** geöffnete Umwälzleitung **27,** wobei der Kugelhahn **40** der Abzweigleitung **38** geschlossen ist.
Das Lot/Öl-Gemisch wird nunmehr mindestens 20 mal durch den Dispergierbehälter **19** und die dreistufige Schereinrichtung **23** umgewälzt. Dies sichert die gewünschte Teilchengröße in einem engen Kornband, so daß Teilchengrößen zwischen 1 bis 100 µm eingestellt werden können. Sind Teilchengrößen von beispielsweise etwa 6 µm gewünscht, so erreicht man mit dem erfindungsgemäßen Verfahren diese Größenordnung ohne anschließende Klassifizierung.
Es entsteht ein Lot/Öl-Dispergens. Die Ansaugkraft der Scherstufen reicht aus, um die Umwälzung ohne zusätzliches Förderaggregat durchzuführen. Der Kugelhahn **37** wird geschlossen und das Lot/Öl-Dispergens durch Öffnen des Kugelhahnes **40** über die Abzweigleitung **38** in den Sedimentationsbehälter umgelenkt.
Das Lot/Öl-Dispergens strömt in den Sedimentationsbehälter **41** ein, die Lotpartikel sinken infolge ihrer Schwerkraft in den Auffangkorb **43** des Einsatzes **42** und werden dadurch vom überschüssigen Öl abgetrennt, wobei die Lotteilchen vom Öl umhüllt bleiben. Das Öl wird nach Schließen des Kugelhahnes **40** und Öffnen der Kugelhähne **48** bzw. **49** über die Kreiskolbenpumpe **46** und die Steigleitung **47** in den Dispergierbehälter **19** zurückgefördert.
Das Entnehmen der Lotteilchen aus dem Sedimentationsbehälter **41** kann natürlich auch so vorgenommen werden, daß nach dem Absinken der Lotteilchen das überschüssige Öl, wie zuvor beschrieben wurde, abgesaugt und in den Dispergierbehälter **19** zurückbefördert wird. Der Kugelhahn **49** wird geschlossen. Durch das Tauchrohr **63** wird ein fettlösendes Lösungsmittel, beispielsweise Azeton, in den Sedimentationsbehälter **41** mittels einer nichtgezeigten drehrichtungsvariablen Pumpe hineingefördert. Lösungsmittel und Lotpartikel werden dann solange mit einem Rührwerk **64** gerührt bis eine Suspension entsteht, die pumpfähig ist. Nach Drehrichtungsumkehr der Pumpe wird die Suspension aus dem Sedimentationsbehälter **41** abgesaugt und einer nicht dargestellten Reinigungsanlage zugeführt.

Durch den Heizkreislauf **V** wird im Sedimentationsbehälter **41** eine Temperatur eingestellt, die etwa um 100 °C liegt, um die Lotteilchen vor der Entnahme entsprechend abzukühlen.
Bei Entnahme des Auffangkorbes **43** sind die Kugelhähne **40, 48** und **49** geschlossen.
Nach erneutem Einsetzen des Auffangkorbes **43** bleibt der Kugelhahn **40** der Abzweigleitung **38** geschlossen und der Kugelhahn **37** der Umwälzleitung **27** wird geöffnet, so daß der zuvor beschriebene Vorgang erneut ablaufen kann.

Mit den Heiz-/Kühlkreisläufen **I** bis **IV** wird eine Prozeßtemperatur um die 60 °C oberhalb der Liquidustemperatur des Lotes in den Behältern **11** und **19,** den Rohrleitungen **15, 18, 27; 38, 44** und **45,** den Kugelhähnen **17, 21, 37, 40, 48** und **49** sowie in der Schereinrichtung **23** gehalten.
Die mit dem erfindungsgemäßen Verfahren erzeugten Weichlote erreichen ein enges Kornspektrum bis zu 100 µm, wobei eine Klassierung vollkommen entfällt. Durch die Wahl von Anzahl, Form der Schlitze in der Schereinrichtung sowie der Drehzahl der Rotoren und der Anzahl der Umwälzungen gelingt es, auch exakte Korngrößenbereiche deutlich unter 100 µm einzustellen.

| Aufstellung der verwendeten Bezugszeichen | |
|---|---|
| Kompaktmodul | 1 |
| Bodenplatte | 2 |
| Streben von 1 | 3 |
| Gehäusegestell | 4 |
| Wandbleche | 5 |
| Wärme- und Schalldämmplatten | 6 |
| Haltegestelle | 7,8,9 |
| Oberer Bereich des Haltegestells 7 | 10 |
| Schmelzbehälter | 11 |
| Heizverteiler | 12,13 |
| Boden von 11 | 14 |
| Abführleitung von 11 | 15 |
| Flansch an 15 | 16 |
| Kugelhahn an 15 | 17 |
| Rohrleitungsstück | 18 |
| Dispergierbehälter | 19 |
| Anschlußstutzen an 19 | 20 |
| Kugelhahn | 21 |
| Flansch an 21 | 22 |
| Schereinrichtung | 23 |
| Einlaßflansch von 23 | 24 |
| Auslaß von 23 | 25 |
| Auslaßflansch | 26 |
| Umwälzleitung | 27 |
| Flansch von 27 | 28 |
| Antriebsaggregat von 23 | 29 |
| Verfahrbarer Einsatz | 30 |
| Rotor | 31 |
| Stator | 32 |
| Antriebswelle | 33 |
| Schlitze in 31 | 34 |
| Schlitze in 32 | 35 |
| Oberer Bereich von 19 | 36 |
| Kugelhahn von 27 | 37 |
| Abzweigleitung | 38 |
| Flansch von 38 | 39 |
| Kugelhahn von 38 | 40 |
| Sedimentationsbehälter | 41 |
| Einsatz in 41 | 42 |
| Auffangkorb | 43 |
| Ablaufleitungen | 44,45 |
| Kreiskolbenpumpe | 46 |
| Steigleitung | 47 |
| Kugelhahn | 48, 49 |
| Räume | 50 |
| Temperiereinrichtung | 51 |
| Temperaturfühler | 52 |
| Einlaß von 23 | 53 |
| Durchtrittsöffnung | 54 |
| Kugelhahn für 23 | 55 |
| Metallschläuche | 56 |
| Rührwerk in 19 | 57 |
| Scherräume | 58 |
| Zuleitung für Kühlflüssigkeit | 59 |
| Ableitung für Kühlflüssigkeit | 60 |
| Behälter für Kühlflüssigkeit | 61 |
| Behälterabdeckung von 41 | 62 |
| Tauchrohr in 41 | 63 |
| Rührwerk in 41 | 64 |
| Scherstufen | S1,S2,S3 |
| Heiz-/Kühlkreisläufe | I,II,III,IV,V |
| Kühlkreislauf | VI |
| Vorlauf | VL |
| Rücklauf | RL |
| Eintauchtiefe | T |

## Patentansprüche

1. Verfahren zum drucklosen Herstellen von Weichlotpulver, insbesondere exakt sphärische Feinst-Metallpartikel in einem Kornbandspektrum von 1 bis 100 µm und mit einer Liquidustemperatur <250 °C aus Massivlot, bei dem das in einer Vorlage befindliche Lot in einem hochtemperaturbeständigen Öl aufgeschmolzen und anschließend dispergiert wird, wobei das Lot-/Öldichteverhältnis ≥2,5 beträgt, mit folgenden Schritten
a) Einspeisen des geschmolzenen Lotes durch Schwerkraft in eine weitere Ölvorlage unter Einstellung eines Volumenverhältnisses von Öl zur Lotschmelze von mindestens 10:1,
b) Dispergieren des flüssigen Lotes durch Rühren und mechanisches Abscheren in hintereinandergeschalteten Scherstufen nach dem Rotor-Statorprinzip bei Drehzahlen von 1500 bis 5000 U/min unter Zugabe von Öl aus der Vorlage des Schrittes a),
c) mindestens 20faches Umwälzen des Lot/Öl-Gemisches des Schrittes b) in einem Kreislauf entgegen der Strömungsrichtung über die Ölvorlage des Schrittes a) und den Scherstufen, wobei durch Steuerung der Umfangsgeschwindigkeit, der Stufenanzahl und der Geometrie der Rotoren die Partikelgröße und Partikelgrößenverteilung des Dispergats im Dispergens eingestellt wird,
d) Ausschleusen des Lot/Öl-Gemisches aus dem Kreislauf des Schrittes c) in eine weitere Ölvorlage zum Abtrennen des Dispergats durch Sedimentation und Zurückbeförderung des Öls in die Vorlage des Schrittes b) und/oder a) und
e) Entnehmen und Zuführen des Dispergats des Schrittes d) zum Reinigen.

2. Verfahren nach Anspruch 1,
**dadurch gekennzeichnet, daß** als Öl pflanzliche oder tierische Öle, vorzugsweise Rizinusöl, verwendet wird.

3. Verfahren nach Anspruch 1,
**dadurch gekennzeichnet, daß** das Lot/Öl-Gemisch die Scherstufen in Schwerkraftrichtung nacheinander durchströmt.

4. Verfahren nach Anspruch 1 bis 3,
**dadurch gekennzeichnet, daß** der Kreislauf des Schrittes c) durch den Rotor/Stator selbstfördernd angetrieben wird.

5. Verfahren nach Anspruch 1,
**dadurch gekennzeichnet, daß** die Prozeßtemperatur durch die Öltemperatur in den Schritten b) und c) auf mindestens 30 °C oberhalb der Liquidustemperatur des Lotes und die Öltemperatur nach dem Ausschleusen des Schrittes d) auf etwa 20 bis 130 °C eingestellt wird.

6. Verfahren nach einem oder mehreren der Ansprüche 1 bis 5, **dadurch gekennzeichnet, daß** die Prozeßtemperatur in den einzelnen Schritten durch separate Heiz-/Kühlkreisläufe geregelt wird.

7. Verfahren nach einem oder mehreren der Ansprüche 1 bis 5, **dadurch gekennzeichnet, daß** die Prozeßtemperatur in allen Stufen durch einen einzigen Heiz-/Kühlkreislauf eingestellt wird.

8. Verfahren nach Anspruch 1, **dadurch gekennzeichnet, daß** das Entnehmen des Dispergats des Schrittes e) durch Versetzen des Dispergats mit Lösungsmittel, Rühren zum Herstellen einer Suspension und das Zuführen der Suspension zum Waschen durch Abpumpen durchgeführt wird.

9. Verfahren nach Anspruch 1, **dadurch gekennzeichnet, daß** das Entnehmen des Dispergats des Schrittes e) durch Schwerkrafttrennung durchgeführt wird.

10. Verfahren nach Anspruch 8, **dadurch gekennzeichnet, daß** als Lösungsmittel des Schrittes e) ein fettlösendes Lösungsmittel, vorzugsweise Azeton, verwendet wird.

11. Vorrichtung zum drucklosen Herstellen von Weichlotpulver, vorzugsweise exakt sphärische Feinst-Metallpartikel in einem Kornbandspektrum von 1 bis 100 µm und mit einer Liquidustemperatur <250 °C aus Massivlot, mit einem beheizbaren Behälter zum Aufschmelzen des Lotes in einem hochtemperaturbeständigen Öl, **dadurch gekennzeichnet, daß** in einem Kompaktmodul **(1)** der Schmelzbehälter **(11)** für das Massivlot und ein Dispergierbehälter **(19)** für die Dispergierung der Lotschmelze im Öl kaskadenartig zueinander und ein Sedimentationsbehälter **(41)** für die Abtrennung des Lotdispergats vom Öl unterhalb des Dispergierbehälters angeordnet und miteinander durch Rohrleitungen **(15,18,27,38,44,45,47)** verbunden sind, wobei sich der Schmelzbehälter **(11)** oberhalb des Dispergierbehälters **(19)** im Kompaktmodul **(1)** befindet, und daß dem Dispergierbehälter **(19)** eine mehrstufige Schereinrichtung **(23)** zum Zerteilen der Lotschmelze in Schmelztröpfchen zugeordnet ist, wobei die Zuleitung **(15)** vom Schmelzbehälter zum Dispergierbehälter **(19)** unter Neigung durch ein Rohrstück **(18)** injektorartig in den Bodenbereich des Dispergierbehälters geführt ist, an dessen tiefsten Punkt ein Anschlußstutzen **(20)** mit Flansch **(22)** für den Anschluß der Schereinrichtung **(23)** angeordnet ist, deren Auslaß **(25)** an die in den oberen Teil des Dispergierbehälters zurückgeführte Umwälzrohrleitung **(27)** angeflanscht ist, die über eine Abzweigleitung **(38)** in den Sedimentationsbehälter **(41)** einmündet, welcher seinerseits durch eine Steigleitung **(47)** mit dem oberen Teil des Dispergierbehälters **(19)** über eine Pumpe **(46)** mit Ablaufleitungen **(44,45)** in Verbindung steht, und daß alle Behälter **(11,19,41),** Rohrleitungen **(15,18,27,38,44,45,47),** die Schereinrichtung **(23)** und Pumpe **(46)** durch mindestens eine Temperiereinrichtung **(51)** beheizbar ist.

12. Vorrichtung nach Anspruch 11, **dadurch gekennzeichnet, daß** alle Behälter **(11,19,41)** und Rohrleitungen **(15,18, 27,38,44,45,47)** als Doppelwandkörper aus Edelstahl, vorzugsweise V2A, ausgebildet sind, deren von den Außen- und Innenwänden gebildeten Zwischenräume **(50)** mit einem Hochtemperatur-Wärmeträgeröl aus der Temperiereinrichtung **(51)** beaufschlagt sind.

13. Vorrichtung nach Anspruch 11, **dadurch gekennzeichnet, daß** Dispergierbehälter **(19)** in einen separaten Heiz-/Kühlkreislauf **(II)** und die Pumpe **(46),** Steigleitung **(47)** und die Ablaufleitung **(34)** in einen weiteren separaten Heiz/Kühlkreislauf **(I)** eingebunden sind, und daß der Schmelzbehälter **(11)** mit Abführleitung **(15)** in einen separaten Heiz-/Kühlkreislauf **(III),** die Schereinrichtung **(23)** und Umwälzleitung **(27)** in einen separaten Heiz-/Kühlkreislauf **(IV)** und zusätzlich in einem Kühlkreislauf **(VI)** mit Kühlbehälter **(61),** der Sedimentationsbehälter **(41)** mit Abzweigleitung **(38)** und Ablaufleitung **(45)** in einen separaten Heiz-/Kühlkreislauf **(V)** zusammengefaßt sind, wobei wärmebeständige flexible Metallschläuche **(56)** die verbindenden Rohrleitungen bilden und jeweils mindestens an einen gemeinsamen Verteiler **(12,13)** angeschlossen sind, welcher mit der Temperiereinrichtung **(51)** durch eine Vor- und Rücklaufleitung verbunden ist.

14. Vorrichtung nach Anspruch 11, **dadurch gekennzeichnet, daß** alle Behälter **(11,19,41),** Rohrleitungen **(15,18,27,38,44,45,47),** Absperrorgane **(17,21,37,40,48,49,55),** Flansche **(16,22,24,26,28,39)** und die Schereinrichtung **(23)** in einen einzigen Heiz-/Kühlkreislauf eingebunden sind.

15. Vorrichtung nach Anspruch 11, **dadurch gekennzeichnet, daß** alle Behälter **(11,19,41),** Rohrleitungen **(15,18,27,38,44,45,47),** Absperrorgane **(17,21,37,40,48,49,55),** Flansche **(16,22,24,26,28,39)** und die Schereinrichtung **(23)** elektrisch, vorzugsweise durch Heizmanschetten, beheizbar sind.

16. Vorrichtung nach Anspruch 11 bis 15, **dadurch gekennzeichnet, daß** die Rohrleitungen **(15,18,27,38,44,45,47)** mit Absperrorganen, vorzugsweise Kugelhähnen, versehen sind.

17. Vorrichtung nach einem oder mehreren der Ansprüche 11 bis 16, **dadurch gekennzeichnet, daß** die Schereinrichtung **(23)** aus mehreren, vorzugsweise drei, hintereinander auf einer Antriebswelle **(33)** drehfest angeordneten Rotoren **(31),** die durch Schlitze **(34)** voneinander beabstandete Zähne aufweisen, wobei die Rotoren **(31)** in einen die Scherstufen voneinander trennenden, gegen Verdrehung gesicherten Stator **(32)** eingesetzt sind, der durch Schlitze **(35)** beabstandete Zähne aufweist, wobei die Schlitze **(34,35)** im Rotor und Stator bei Drehung des Rotors Durchtrittsöffnungen **(54)** zum Durchtritt des Lot/Öl-Gemisches in die nächstfolgende Scherstufe freigeben.

18. Vorrichtung nach Anspruch 17, **dadurch gekennzeichnet, daß** die Zähne von Rotor **(31)** und Stator **(32)** Zahnkreise bilden, die konzentrisch zueinander und ineinandergesteckt angeordnet sind.

19. Vorrichtung nach einem oder mehreren der Ansprüche 11 bis 17, **dadurch gekennzeichnet, daß** die Schereinrichtung **(23)** in senkrechter Einbaulage in Flucht der Behälterachse des Dispergierbehälters **(19)** angeordnet ist, wobei das Lot/Öl-Gemisch axial in den Einlaß **(53)** der Schereinrichtung **(23)** selbständig gesaugt und radial durch die Schlitze **(34,35)** der Rotor-Statoranordnung gepreßt wird.

20. Vorrichtung nach einem oder mehreren der Ansprüche 11 bis 18, **dadurch gekennzeichnet, daß** der Dispergierbehälter **(19)** mit einem Rührwerk **(57)** versehen ist.

21. Vorrichtung nach Anspruch 11, **dadurch gekennzeichnet, daß** im Sedimentationsbehälter **(41)** ein Einsatz **(42)** mit Auffangkorb **(43)** für Lotpartikel angeordnet ist.

22. Vorrichtung nach Anspruch 21, **dadurch gekennzeichnet, daß** der Auffangkorb **(43)** an seinem seitlichen Umfang einstellbare Ablauföffnungen aufweist.

23. Vorrichtung nach Anspruch 11 und 21, **dadurch gekennzeichnet, daß** anstelle der Ablaufleitung **(45)** und des Auffangkorbes **(43)** ein durch die Behälterabdeckung **(62)** des Sedimentationsbehälters **(41)** geführtes Tauchrohr **(63)** vorgesehen ist, das einerends bis in die Nähe des Behälterbodens des Behälters **(41)** reicht und anderenends mit einer drehrichtungsvariablen Pumpe zum Absaugen des suspendierten Dispergats bzw. Zuführen von Lösungsmittel in den Behälter **(41)** verbunden ist, und daß der Sedimentationsbehälter **(41)** mit einem Rührwerk **(64)** versehen ist.

24. Vorrichtung nach einem oder mehreren der Ansprüche 11 bis 23, **dadurch gekennzeichnet, daß** in den Behältern **(11,19,41)** und Rohrleitungen **(15,18,27,38,44,45,47,63)** Temperaturfühler **(52)** für die Messung der Lottemperatur angeordnet sind.

25. Vorrichtung nach Anspruch 11, **dadurch gekennzeichnet, daß** der Kompaktmodul **(1)** aus einem Gehäusegestell **(4)** mit einer Bodenplatte **(2)** besteht, in dem tischartige Haltegestelle **(7,8,9)** für die Vormontage der Behälter **(11,19,41),** Rohrleitungen **(27,38,44,45,47),** der Verteiler **(12,13)** und der Pumpe **(46)** vorgesehen sind.

26. Vorrichtung nach Anspruch 11 und 25, **dadurch gekennzeichnet, daß** die Schereinrichtung **(23)** von einem auf der Bodenplatte verfahrbaren Einsatz **(30)** aufgenommen und spannungsfrei an dem Flansch **(22)** des Kugelhahns **(21)** und dem Flansch **(28)** der Umwälzleitung **(27)** gehalten ist.

27. Vorrichtung nach Anspruch 11 und 25, **dadurch gekennzeichnet, daß** das Gehäusegestell **(4)** mit Wandblechen versehen ist, deren Innenseiten Wärme- und Schalldämmplatten **(6)** mit aufkaschierter Alumniumfolie tragen.

28. Vorrichtung nach Anspruch 11, **dadurch gekennzeichnet, daß** die Behälter **(11,19,41),** die Rohrleitungen **(15,18,20,27,38,44,45,47,63),** die Vorlauf- und Rücklaufleitungen **(VL,RL),** die Absperrorgane **(17,21,37,40,48,49,55),** die Pumpe **(46),** die Metallschläuche **(56)** und die Verteiler **(12,13)** wärmeisoliert sind.

29. Vorrichtung nach Anspruch 11, **dadurch gekennzeichnet, daß** die Temperiereinrichtung **(51)** verfahrbar ausgebildet und außerhalb vom Kompaktmodul **(1)** angeordnet ist.

## Claims

1. Method for pressureless production of soft solder powder, particularly of exactly spherical fine metal particles in a grain size range of 1 to 100 µm and with a liquidus temperature <250 °C from massive solder, whereby the solder existing in a receiver is melted in an oil which remains stable at high temperature and subsequently dispersed whereby the solder/oil density ration is ≥2.5, with following steps:
a) gravity feeding the melted solder into a further oil container while setting volume ratio of oil to solder melt of at least 10:1,
b) dispersing the liquefied solder through agitating and mechanical shearing in consecutive shearing steps according the rotor-stator-principle at rotational speeds of 1500 to 5000 rpm, while adding oil from the container of step a),
c) recirculating the solder/oil mixture of step b) at least 20 times in a circuit against the flow direction through oil container of step a) and the shearing steps, whereby due to the control of the peripheral speed, the number of steps and the geometry of the rotor, the particle size distribution of the dispersed material is set,
d) discharging the solder/oil mixture from the circuit of step c) in a further container for the separation of the dispersed material through sedimentation and returning the oil to the container of step b) and/or a) and
e) removing the dispersed material of step d) for cleaning.

2. Method according to claim 1, **characterized in that** as oil vegetable and animal oils are used, preferably castor oil.

3. Method according to claim 1, **characterized in that** the solder/oil mixture flows through the succession of shearing steps in gravity direction.

4. Method according to claim 1 to 3, **characterized in that** the circuit of step c) is self-feedingly entrained by the rotor/stator.

5. Method according to claim 1, **characterized in that** the process temperature is set by the oil temperature in steps b) and d) at least by 30 °C above the liquidus temperature and the oil temperature after discharge of step d) is set at 20 to approximately 130 °C.

6. Method according to one or more of claims 1 to 5, **characterized in that** the process temperature in the individual steps is controlled through separate heating/cooling circuits.

7. Method according to one or more of claims 1 to 6, **characterized in that** the process temperature in all steps is set by a single heating/cooling circuit.

8. Method according to claim 1, **characterized in that** the removal of dispersed material of step e) is performed by adding solvent to the dispersed material, agitating and producing a suspension and conveying the suspension for washing by pumping it out.

9. Method according to claim 1, **characterized in that** the removal of the dispersed material of step e) is performed by gravity separation.

10. Method according to claim 8, **characterized in that** as solvent for step e) a fat-dissolving solvent, preferably acetone, is used.

11. Device for the pressureless production of soft solder powder, preferably exactly spherical fine particles in a grain size range of 1 to 100 µm and with a liquidus temperature <250 °C from massive solder, with a heatable container for melting the solder in an oil which remains stable at high temperatures, **characterized in that** in a compact module (1) melt container (11) for the massive solder and a dispersion container (19) are arranged in a cascade to each other and a sedimentation container (41) for separating the dispersed solder material from the oil is arranged underneath the dispersion container, all being interconnected by pipe conduits (15, 18, 27, 38, 44, 45, 47), whereby the melt container (11) is located above the dispersion container (19) in the compact module (1), and that the dispersion container (19) is associated with a multistep shearing device (23) for the separation of the solder melt into melt droplets, whereby the conduit (15) from the melt container to the dispersion container (19)leads injector-like through a pipe segment (18) at an inclination into the bottom area of the dispersion container, at whose deepest point a connection pipe (20) with a flange (22) for the connection the shearing device (23) is arranged, whose outlet (25) is flanged to the recirculation conduit (27) leading to the upper part of the dispersion container, which ends via a branched-off pipe (38) in the sedimentation container (41), which in turn through an ascending pipe (47) is in contact with the upper part of the dispersion container (19) via a pump (46) with outlet conduits (44, 45), and that all containers (11, 19, 41), pipe conduits (15, 18, 27, 38, 44, 45, 47), the shearing device (23) and the pump (46) is heated by means of at least one tempering device (51).

12. Device according to claim 11, **characterized in that** all containers (11, 19, 41) and pipe conduits (15, 18, 27, 38, 44, 45, 47) are double-walled bodies made of stainless steel, preferably V2A, whose spaces (50) formed by the inner and outer walls are acted upon with a high temperature heat carrier oil by the tempering device (51).

13. Device according to claim 11, **characterized in that** the dispersion container (19) is integrated in a separate heating/cooling circuit (II) and the pump (46), ascending pipe (47) and the outlet conduit (34) are integrated in a further heating/cooling circuit (I), and that the melt container (11) with drain-off pipe (15) are integrated in a separate heating/cooling circuit (III), the shearing device (23) and the recirculation conduit (27) are integrated in a separate heating/cooling circuit (IV) and additionally in a cooling circuit (VI) with the cooling-medium container (61), the sedimentation container 841) with branched-off pipe (38) and outlet conduit (45) are integrated in a separate heating/cooling conduit (V) , whereby heat-resistant flexible metal hoses (56) form the connecting pipe conduits, each being connected to at least one common distributor (12, 13), which is connected to the tempering device (51) via a flow and return line.

14. Device according to claim 11, **characterized in that** all containers (11, 19, 41), pipe conduits (15, 18, 27, 38, 44, 45, 47), locking members (17, 21, 37, 40, 48, 49, 55), flanges (16, 22, 24, 26, 28, 39) and the shearing device (23) are integrated in a single heating/cooling circuit.

15. Device according to claim 11, **characterized in that** all containers (11, 19, 41), pipe conduits (15, 18, 27, 38, 44, 45, 47), locking members (17, 21, 37, 40, 48, 49, 55), flanges (16, 22, 24, 26, 28, 39) and the shearing device (23) can be electrically heated, preferably by means of heating cuffs.

16. Device according to claim 11, **characterized in that** the pipe conduits (15, 18, 27, 38, 44, 45, 47) are provided with locking members, preferably ball valves.

17. Device according to one or more of claims 11 to 16, **characterized in that** the shearing device 823) consists of several, preferably three rotors (31) arranged consecutively on a drive shaft (33) corotationally with the same, having teeht spaced apart by slots (34), wehereby the rotors (31) are set in a stator (32) secured against rotation, separating the shearing steps from each other, having teeth spaced apart by slots (35), whereby during rotation the slots (34, 35) in the rotor and stator leave passage openings (54) for the passage of solder/oil mixture to the following shearing step.

18. Device according to claim 17, **characterized in that** the teeth of the rotor (31) and the stator (32) form tooth circles which are arranged concentrically with respect to each other and interfitted.

19. Device according to one or more of claim 11 to 17, **characterized in that** the shearing device (23) is arranged in vertical position in alignment with the container axis of the dispersion container (19), whereby the solder/oil mixture is independently sucked axially into the inlet (53) of the shearing device (23) and pressed radially through the slots (34, 35) of the rotor-stator assembly.

20. Device according to one or more of claims 11 to 18, **characterized in that** the dispersion container (19) is provided with an agitator (57).

21. Device according to claim 11, **characterized in that** in the sedimentation container (41) an insert (42) with a collection basket (43) is arranged.

22. Device according to claim 21, **characterized in that** the collection basket (43) has adjustable outlet openings at its periphery.

23. Device according to claim 11 and 21, **characterized in that** instead of the outlet conduit (45) and the collection basket (43), a dip pipe (63) passing through the container cover (62) of the sedimentation container (41) reaches with one end close to the container bottom of the container (41) and on the other end is connected with a pump with variable direction of rotation for aspiring of the suspended dispersed material, respectively for the introduction of solvent in the container (41), and that the sedimentation container (41) is provided with an agitator (64).

24. Device according to one or more of claims 11 to 23, **characterized in that** in the containers (11, 19, 41) and pipe conduits (15, 18, 27, 38, 44, 45, 47, 63) temperature sensors (52) are arranged for measuring the temperature of the solder.

25. Device according to claim 11, **characterized in that** the compact module (1) consists of a housing frame (4) with a bottom plate (2), wherein table-like support stands (7, 8, 9) are provided for the preliminary assembly of the containers (11, 19, 41), pipe conduits (27, 38, 44, 45, 47), the distributors (12, 13) and the pump (46).

26. Device according to claim 11 and 25, **characterized in that** the shearing device (23) is received by an insert (30) movable on the bottom plate and is tensionless held on the flange (22) of the ball valve (21) and the flange (28) of the recirculation conduit (27).

27. Device according to claim 11 and 25, **characterized in that** the housing frame (4) is provided with wall plates whose inner sides have heat and sound insulating plates (6) coated with aluminium foil.

28. Device according to claim 11, **characterized in that** the containers (11, 19, 41), the pipe (15, 18, 20, 27, 38, 44, 45, 47, 63), the flow and return lines (VL; RL), the locking organs (17, 21, 37, 40, 48, 49, 55), the pump (46), the metal hoses (56) and the distributors (12, 13) are heat-insulated.

29. Device according to claim 11, **characterized in that** the tempering device (51) is mobile and can be arranged outside the compact module (1).

## Revendications

1. Procédé pour la fabrication sans pression de poudre de brasage tendre, notamment de particules métalliques très fines exactement sphériques dans une gamme de granulation de 1 à 100 µm et d'une température de liquidus <250 °C en brasage massif, pour lequel le brasage se trouvant en obturateur florentin est fondu dans une huile à haute constance thermique et ensuite dispersé, le rapport de la masse volumique brasage/huile étant ≥2,5, par les étapes suivantes :
a) alimentation par gravité du brasage fondu dans un autre obturateur florentin en ajustant un rapport volumique de l'huile à la fonte de brasage d'au moins 10 : 1,
b) dispersion du brasage liquide par agitation et cisaillement mécanique en étapes de cisaillement montées en série suivant le principe rotor-stator à des vitesses de rotation de 1 500 à 5 000 tr/mn avec addition d'huile du florentin de l'étape a),
c) circulation au moins 20 fois du mélange brasage/huile de l'étape b) dans un circuit en sens de courant inverse par l'intermédiaire de l'obturateur florentin d'huile de l'étape a) et des étapes de cisaillement, la grandeur des particules et la répartition de la grandeur des particules du dispersé au dispersant étant ajustées par le réglage de la vitesse périphérique, du nombre des étapes et de la géométrie des rotors,
d) éclusage du mélange brasage/huile du circuit de l'étape c) dans un autre obturateur florentin d'huile pour la séparation du dispersé par sédimentation et le transport de retour de l'huile à l'obturateur de l'étape b) et/ou a) ainsi que
e) le prélèvement et l'amenée du dispersé de l'étape d) pour le nettoyage.

2. Procédé suivant la revendication 1,
**caractérisé en ce qu'**il est utilisé comme huile des huiles végétales ou animales, de préférence de l'huile de ricin.

3. Procédé suivant la revendication 1,
**caractérisé en ce que** le mélange brasage/huile passe successivement à travers les étapes de cisaillement en sens de la gravité.

4. Procédé suivant les revendications 1 à 3,
**caractérisé en ce que** le circuit de l'étape c) est commandé à auto-transport par le rotor/stator.

5. Procédé suivant la revendication 1,
**caractérisé en ce que** la température du processus est réglée par la température de l'huile dans les étapes b) et c) à 30 °C au moins au-dessus de la température de liquidus du brasage et que la température de l'huile soit ajustée à 20 jusqu'à 130 °C environ, après l'éclusage de l'étape d).

6. Procédé suivant l'une ou plusieurs des revendications 1 à 5, **caractérisé en ce que** la température du processus est réglée dans les différentes étapes par des circuits de chauffage/refroidissement séparés.

7. Procédé suivant l'une ou plusieurs des revendications 1 à 5, **caractérisé en ce que** la température du processus est réglée dans toutes les étapes par un seul circuit de chauffage/refroidissement.

8. Procédé suivant la revendication 1,
**caractérisé en ce que** le prélèvement du dispersé de l'étape e) est effectué par mélangeage du dispersé avec des véhicules, agitation pour confectionner une suspension et amenée de la suspension au lavage au moyen de pompage.

9. Procédé suivant la revendication 1,
**caractérisé en ce que** le prélèvement du dispersé de l'étape e) est effectué au moyen de la séparation par gravité.

10. Procédé suivant la revendication 8,
**caractérisé en ce qu'**il est employé comme véhicule de l'étape e) un solvant de graisse, de préférence de l'acétone.

11. Installation pour la fabrication sans pression de poudre de brasage tendre, de préférence de particules métalliques très fines exactement sphériques dans une gamme de granulation de 1 à 100 µm et d'une température de liquidus <250 °C en brasage massif, avec un récipient chauffant pour la fonte du brasage dans une huile à haute constance thermique, **caractérisé en ce que**, dans un module compact **(1),** le récipient de fusion **(11)** pour le brasage massif et un récipient à disperser **(19)** pour la dispersion de la fonte de brasage dans l'huile sont disposés l'un par rapport à l'autre de manière en cascade ainsi qu'un récipient de sédimentation **(41)** pour la séparation du dispersé de brasage de l'huile au-dessous du récipient à disperser, et qu'ils sont reliés tous ensemble par des tuyauteries **(15, 18, 27, 38, 44, 45, 47),** le récipient de fusion **(11)** se trouvant au-dessus du récipient de fusion **(19)** dans le module compact **(1),** et qu'un dispositif de cisaillement à plusieurs étages **(23)** pour le démembrement de la fonte de brasage en gouttelettes de fusion est attribué au récipient à disperser **(19),** la conduite d'amenée **(15)** du récipient de fusion au récipient à disperser **(19)** étant menée sous inclinaison par une tubulure **(18)** en forme de tuyère dans la zone du fond du récipient à disperser, au point le plus bas duquel est disposé un ajutoir **(20)** avec bride **(22)** pour le raccordement du dispositif de cisaillement **(23)** dont la sortie **(25)** est bridée sur la conduite de circulation **(27)** ramenée à la partie supérieure du récipient à disperser et débouchant par l'intermédiaire d'une conduite de dérivation **(38)** dans le récipient de sédimentation **(41)** qui, lui, est en liaison avec la partie supérieure du récipient à disperser **(19)** au moyen d'une conduite montante **(47)** par l'intermédiaire d'une pompe **(46)** à conduites de décharge **(44, 45)** et que tous les récipients **(11, 19, 41),** les tuyauteries **(15, 18, 27, 38, 44, 45, 47),** le dispositif de cisaillement **(23)** et la pompe **(46)** peuvent être chauffés par au moins un dispositif d'équilibrage de température **(51).**

12. **.** Installation suivant la revendication 11,
**caractérisé en ce que** tous les récipients **(11, 19, 41)** et tuyauteries **(15, 18, 27, 38, 44, 45, 47)** sont conçus comme corps à double paroi en acier spécial, de préférence V2A, dont les espaces intermédiaires **(50)** formés par les parois extérieures et intérieures, sont alimentés d'une huile caloporteuse à température élevée du dispositif d'équilibrage de température **(51).**

13. Installation suivant la revendication 11, **caractérisé en ce que** le récipient à disperser **(19)** est intégré dans un circuit de chauffage/refroidissement séparé **(II),** la pompe **(46),** la conduite montante **(47)** et la conduite de décharge **(34)** dans un autre circuit de chauffage/refroidissement séparé **(I),** et que soient regroupés le récipient de fusion **(11)** avec conduite de sortie **(15)** dans un circuit de chauffage/refroidissement séparé **(III),** le dispositif de cisaillement **(23)** et la conduite de circulation **(27)** dans un circuit de chauffage/refroidissement séparé **(IV)** et en outre dans circuit de refroidissement **(VI)** avec récipient frigorifique **(61),** le récipient de sédimentation **(41)** avec conduite de dérivation **(38)** et conduite de décharge **(45)** dans un circuit de chauffage/refroidissement séparé **(V),** des tuyaux métalliques flexibles et thermostables **(56)** formant la tuyauterie de liaison et étant raccordés chaque fois au moins à une nourrice d'embranchement commune **(12, 13)** qui est reliée au dispositif d'équilibrage de température **(51)** par une conduite d'aller et de retour.

14. Installation suivant la revendication 11,
**caractérisé en ce que** tous les récipients **(11, 19, 41),** tuyauteries **(15, 18, 27, 38, 44, 45, 47),** organes d'arrêt **(17, 21, 37, 40, 48, 49, 55),** brides **(16, 22, 24, 26, 28, 39)** et le dispositif de cisaillement **(23)** sont intégrés dans un seul circuit de chauffage/refroidissement.

15. Installation suivant la revendication 11,
**caractérisé en ce que** tous les récipients **(11, 19, 41),** tuyauteries **(15, 18, 27, 38, 44, 45, 47),** organes d'arrêt **(17, 21, 37, 40, 48, 49, 55),** brides **(16, 22, 24, 26, 28, 39)** et le dispositif de cisaillement **(23)** peuvent être chauffés électriquement, de préférence par des manchons chauffants.

16. Installation suivant les revendications 11 à 15, **caractérisé en ce que** les tuyauteries **(15, 18, 27, 38, 44, 45, 47)** sont pourvues d'organes d'arrêt, de préférence de robinets sphériques.

17. Installation suivant l'une ou plusieurs revendications 11 à 16, **caractérisé en ce que** le dispositif de cisaillement **(23)** comprend plusieurs, de préférence trois rotors **(31)** disposés en série sur un arbre de commande **(33)** de manière résistante à la torsion qui présentent des dents espacées les unes par rapport aux autres au moyen de fentes **(34),** les rotors **(31)** étant insérés dans un stator **(32)** séparant les étapes de cisaillement les unes des autres, assuré contre la torsion, qui présente des dents espacées par des fentes **(35),** ces fentes **(34, 35)** dans le rotor et le stator dégageant , à la rotation du rotor, des ouvertures de passage **(54)** pour l'accès du mélange brasage/huile à l'étape de cisaillement suivante.

18. Installation suivant la revendication 17,
**caractérisé en ce que** les dents du rotor **(31)** et du stator **(32)** forment des cercles dentées disposés mutuellement de manière concentrique et emboîtés les uns dans les autres.

19. Installation suivant l'une ou plusieurs revendications 11 à 17, **caractérisé en ce que** le dispositif de cisaillement **(23)** est disposé en position de montage verticale en alignement par rapport à l'axe de récipient du réservoir à disperser **(19),** le mélange brasage/huile étant aspiré automatiquement de manière axiale à l'entrée **(53)** du dispositif de cisaillement **(23)** et pressé de manière radiale à travers les fentes **(34, 35)** de la disposition rotor-stator.

20. Installation suivant l'une ou plusieurs revendications 11 à 18, **caractérisé en ce que** le récipient à disperser **(19)** est pourvu d'un agitateur **(57).**

21. Installation suivant la revendication 11,
**caractérisé en ce qu'**une pièce d'insertion **(42)** avec panier collecteur **(43)** pour les particules de brasage est disposée dans le récipient de sédimentation **(41).**

22. Installation suivant la revendication 21,
**caractérisé en ce que** le panier collecteur **(43)** présente des ouvertures de décharge réglables sur son pourtour latéral.

23. Installation suivant les revendications 11 et 21, **caractérisé en ce qu'**à la place de la conduite de décharge **(45)** et du panier collecteur **(43),** il est prévu un tube plongeur **(63)** mené à travers le recouvrement de réservoir **(62)** du récipient de sédimentation **(41)** qui, d'un côté, va jusqu'à la proximité du fond de réservoir du récipient **(41)** et, de l'autre côté, est relié à une pompe variable en sens de rotation pour respectivement l'aspiration du dispersé en suspension et l'alimentation de véhicules solvants au récipient **(41),** et que le récipient de sédimentation **(41)** soit pourvu d'un agitateur **(64).**

24. Installation suivant l'une ou plusieurs revendications 11 à 23, **caractérisé en ce que** des sondes de température **(52)** pour le mesurage de la température du brasage sont disposées dans les récipients **(11, 19, 41)** et les tuyauteries **(15, 18, 27, 38, 44, 45, 47).**

25. Installation suivant la revendication 11,
**caractérisé en ce que** le module compact **(1)** comprend un bâti de boîtier **(4)** avec une plaque de fond **(2)** dans lequel sont prévus des dispositifs de retenue en forme de table **(7, 8 ,9)** pour le montage préliminaire des récipients **(11, 19, 41),** des tuyauteries **(15, 18, 27, 38, 44, 45, 47),** des nourrices **(12, 13)** et de la pompe **(46).**

26. Installation suivant les revendications 11 et 25, **caractérisé en ce que** le dispositif de cisaillement **(23)** est reçu d'un élément d'insertion **(30)** mobile sur la plaque de fond et maintenu sans contrainte sur la bride **(22)** du robinet sphérique **(21)** et la bride **(28)** de la conduite de circulation **(27)**

27. Installation suivant les revendications 11 et 25, **caractérisé en ce que** le bâti de boîtier **(4)** est pourvu de tôles de paroi dont les parois intérieures sont pourvues de plaques calorifuges et insonorisantes **(6)** à feuille d'aluminium contreplaquées.

28. Installation suivant la revendication 11,
**caractérisé en ce que** les récipients **(11, 19, 41),** les tuyauteries **(15, 18, 20, 27, 38, 44, 45, 47, 63),** les conduites d'aller et de retour **(VL, RL),** les organes d'arrêt **(17, 21, 37, 40, 48, 49, 55),** la pompe **(46),** les tuyaux métalliques **(56)** et les nourrices **(12, 13)** sont calorifugés.

29. Installation suivant la revendication 11,
**caractérisé en ce que** le dispositif d'équilibrage de température **(51)** est conçu de manière mobile et en dehors du module compact **(1).**
